# EUROPÄISCHE PATENTSCHRIFT

(11) **EP 1 917 623 B1**
(45) Veröffentlichungstag und Bekanntmachung des Hinweises auf die Patenterteilung: **24.06.2009**
(21) Anmeldenummer: 06763034.3
(22) Anmeldetag: 23.08.2006
(51) Int. Cl.: G06K 7/00

(54) **KONTAKTTRÄGER FÜR EINEN SMART CARD CONNECTOR**
CONTACT SUPPORT FOR A SMART CARD CONNECTOR
PORTE-CONTACTS DESTINE A UN CONNECTEUR A CARTE A PUCE

(30) Priorität: 23.08.2005 DE 102005039898
(43) Veröffentlichungstag der Anmeldung: 07.05.2008
(73) Patentinhaber: Amphenol-Tuchel Electronics GmbH, 74080 Heilbronn (DE)
(72) Erfinder: BERTSCH, Michael Steffen, 74074 Heilbronn (DE)
(74) Vertreter: Wagner, Karl H.
(86) Internationale Anmeldenummer: PCT/EP2006/008287
(87) Internationale Veröffentlichungsnummer: WO 2007/022969

(56) Entgegenhaltungen:
- EP-A2- 1 197 908
- GB-A- 1 218 739
- GB-A- 2 322 723
- US-A- 5 370 544
- US-B1- 6 296 500

## Beschreibung

Die Erfindung bezieht sich auf einen Smart Card Connector, der mit einem Kartenanwesenheitsschalter ausgestattet ist. Die Erfindung besieht sich auch auf einen Kontaktträger, der sowohl zur Aufnahme von Kontakten zur Kontaktierung der Smart Card (Karte) ausgestattet ist, und auch mit Mitteln zur Aufnahme und Halterung der einen Kartenanwesenheitsschalter bildenden Kontakte, nämlich einem aktiven und einem passiven Kontakt.

Die Erfindung bezieht sich ferner auf einen Kartenanwesenheitsschalter, der in einer Kammer angeordnet einen aktiven und einen passiven Kontakt aufweist.

Dokument US-B-629 6500 offenbart einen Konkaktträger nach dem Oberbegriff des Anspruchs 1.

Die Erfindung hat sich die Aufgabe gestellt, einen Smart Card Connector bzw. einen Kontaktträger mit einem Kartenanwesenheitsschalter derart auszustatten, dass dessen Schaltkontakte die Kartenanwesenheit zu einem definierten Zeitpunkt mit einem Signalwechsel anzeigen. Der Anwesenheitsschalter soll dabei in einfacher Weise gemäß zwei Varianten vorgesehen werden kann, wobei bei der ersten Variante der Anwesenheitsschalter anfangs geschlossen (normally closed) ist, während bei der zweiten Variante der Anwesenheitsschalter anfangs geöffnet (normally open) ist. Der Schalter gemäß der ersten Variante kann auch als "Öffner" und der der zweiten Variante als "Schließer" bezeichnet werden.

Die vorliegende Erfindung beabsichtigt ferner den Kartenanwesenheitsschalter derart auszugestalten, dass die beiden den Anwesenheitsschalter bildenden Schaltkontakte, im Allgemeinen ein aktiver Schaltkontakt und ein passiver Schaltkontakt, auch um 180° gedreht montiert werden können, so dass unter Beibehaltung des Anschlusslayouts (auf der Leiterplatte) die zwei Schaltervarianten (Öffnen bzw. Schließen, vorzugsweise wahlweise) realisiert werden können.

Erfindungsgemäß sind somit zum einen der Kontaktträger und zum anderen die Schaltkontakte des Kartenanwesenheitsschalters derart gestaltet, dass entweder ein "Öffner" oder ein "Schließer" realisiert werden wird.

Insbesondere wird eine im Kontaktträger (oder auch separat) vorgesehene Kontaktkammer derart ausgebildet, dass jeder der Schaltkontakte in zwei Richtungen montiert werden kann. Dabei ist die Geometrie der Kontakt- bzw. Schalterkammer beidseitig so gestaltet, dass sich die zwei Schaltervarianten realisieren lassen. Vorzugsweise ist der passive Schalterkontakt für beide Schaltervarianten identisch, während der aktive Schalterkontakt beim Fertigbiegeprozess lediglich an zwei Stellen anders abgewinkelt wird.

Anders als beim Stand der Technik ist es erfindungsgemäß nicht erforderlich, komplett unterschiedliche Kontaktträger und Schaltkontakte für die zwei genannten Schaltervarianten vorzusehen. Der Kontaktträger ist für die beiden Schaltervarianten identisch. Für beide Schaltervarianten wird, wie erwähnt, derselbe passive Schaltkontakt verwendet, und beim aktiven Schaltkontakt ist die Platine bzw. Leiterplatte und der Vorstanzprozess ebenfalls für beide Varianten identisch. Das bedeutet, dass die Kontaktstelle der Schaltkontakte immer an derselben Stelle liegt, wodurch sich auch keine Änderungen für die Oberflächenbeschichtung ergeben. Im Fertigstanzprozess wird der aktive Schaltkontakt mittels Umbausätzen an zwei definierten Stellen unterschiedlich gebogen.

Weitere bevorzugte Ausgestaltungen der Erfindung ergeben sich aus den Ansprüchen.

Weitere Vorteile, Ziele und Einzelheiten der Erfindung ergeben sich aus der Beschreibung anhand der Zeichnungen; in der Zeichnung zeigt:
- Fig. 1: eine perspektivische Draufsicht auf einen, einen Kartenanwesenheits- schalter in der Form eines Öffners aufweisenden Smart Card Connec- tor mit eingesetzter Smart Card (Karte);
- Fig. 2: eine Teildraufsicht auf den Smart Card Connector gemäß Fig. 1 bei nicht eingesetzter Karte;
- Fig. 3: eine Draufsicht ähnlich Fig. 2 bei eingesetzter Karte;
- Fig. 4: eine Draufsicht auf einen, einen Kartenanwesenheitsschalter in der Form eines Schließers, aufweisenden Smart Card Connector bei nicht eingesetzter Karte;
- Fig. 5: eine Draufsicht auf den Smart Card Connector der Fig. 4 bei eingesetz- ter Karte;
- Fig. 6: eine Draufsicht auf einen Rohling zur Herstellung eines aktiven Kon- takts eines Kartenanwesenheitsschalters, wie er vorzugsweise in den Smart Card Connectoren gemäß den Figuren 1 bis 5 verwendet werden kann;
- Fig. 7: eine Draufsicht auf den aus dem Rohling der Fig. 6 herstellten aktiven Schaltkontakt eines Öffners;
- Fig. 8: eine Draufsicht auf den aktiven Schaltkontakt eines Schließers;
- Fig. 9: eine perspektivische Teildraufsicht auf die Kontaktkammer des als Öff- ner (Fig. 2 und 3) ausgebildeten Kartenanwesenheitsschalters eines Smart Card Connector;
- Fig. 10: eine Teildraufsicht auf den Smart Card Connector gemäß Fig. 2, 3 und 9, wobei der Öffner in seiner geschlossene Stellung gezeigt ist;
- Fig. 11: einen Schnitt längs Linie A-A in Fig. 10;
- Fig. 12: eine perspektivische Ansicht des passiven und des aktiven Schaltkon- takts eines Öffners; und
- Fig. 13: eine perspektivische Ansicht des aktiven und des passiven Schaltkon- takts eines Schließers.

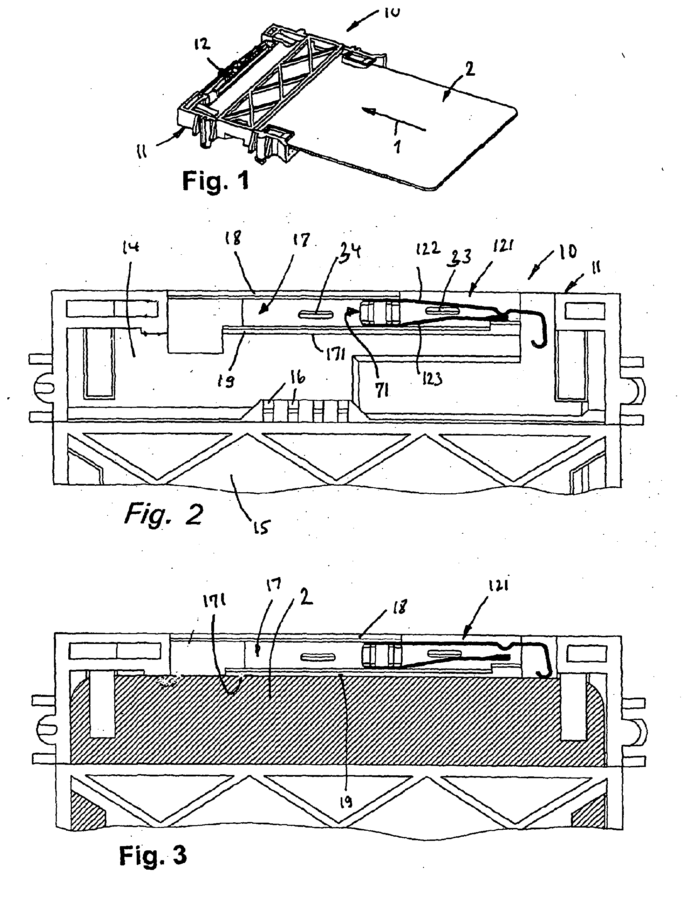

In Fig. 1 ist ein Smart Card Connector 10 dargestellt, der einen Kontaktträger 11 aufweist, in den eine Smart Card 2 (im Folgenden kurz "Karte" genannt) in Richtung des Pfeils 1 eingesetzt ist. Die Einsetz- und Entnahmerichtung 1 wird in der folgenden Beschreibung als Längsrichtung bezeichnet und die senkrecht dazu verlaufende Richtung als Querrichtung. Im in Einsetzrichtung 1 hinteren Bereich des Kontaktträgers 11 ist ein Kartenanwesenheitsschalter 12 vorgesehen.

Nachdem in dem gezeigten Ausführungsbeispiel der Kartenanwesenheitsschalter 12 in einem Kontaktträger 11 realisiert ist, und zwar insbesondere in einem Kontaktträger 11 eines Smart Card Connectors 10, sei im Folgenden zunächst dieser Kontaktträger 11 im Einzelnen beschrieben und sodann die zur Bildung dies Kartenanwesenheitsschalters 12 erforderlichen Kontakte. In diesem Zusammenhang sei darauf hingewiesen, dass der Kartenanwesenheitsschalter 12 auch in irgendeinem anderen Gerät oder auch einfach auf einer Isolierplatte realisiert werden könnte, solange nur die für die Anordnung und Befestigung der Kontakte des Kartenanwesenheitsschalters 12 benötigten und im Folgenden beschriebenen Befestigungsmittel in dem Gerät oder an der Isolierplatte vorgesehen sind. Auch muss die Betätigung des Kartenanwesenheitsschalters 12 nicht notwendigerweise durch eine "Karte" erfolgen, sondern könnte auch in irgendeiner anderen Art und Weise erfolgen.

### Der Kontaktträger 11

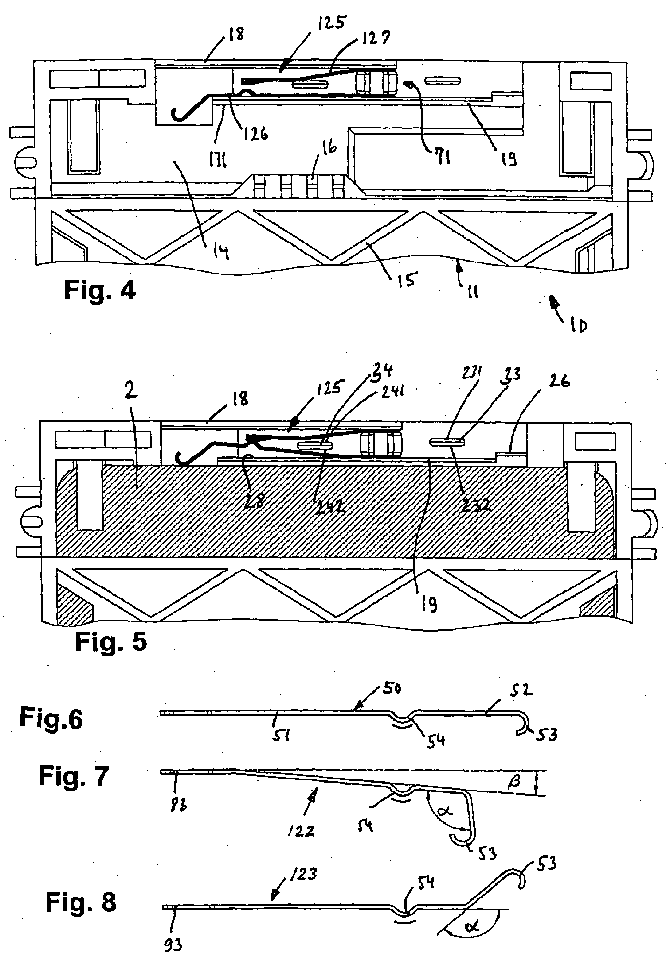

Der vorzugsweise aus Kunststoff einstückig hergestellte Kontaktträger 11 wird insbesondere unter Bezugnahme auf die Figuren 2 bis 10 beschrieben. In den Figuren 2, 3 sowie 9 bis 11 ist der Kontaktträger mit einem kurz als "Öffners" 121 bezeichneten Kartenanwesenheitsschalters 12 gezeigt, während der in den Figuren 4 und 5 dargestellte Kontaktträger 11 zur Realisierung eines als "Schließers" 125 bezeichneten Kartenanwesenheitsschalters 12 eingesetzt wird. Der Öffner 121 ist ein anfangs geschlossener (normally closed) Kartenanwesenheitsschalter 12, während der Schließer 125 ein anfangs geöffneter (normally open) Kartenanwesenheitsschalter 12 ist. Der Öffner 121 bzw. der Schließer 125 weisen vorzugsweise zwei Schaltkontakte auf: einen aktiven Schaltkontakt 122 - vgl. dazu Fig. 2 und Fig. 4 - bzw. 126 und einen passiven Schaltkontakte 123 bzw. 127.

Der Kontaktträger 11 weist eine untere Bodenplatte 14 auf, über der jedenfalls teilweise eine obere als Kartenführungsplatte 15 bezeichnete Platte unter Bildung eines die Karte 2 aufnehmenden Kartenschachtes verläuft. In der Bodenplatte 14 sind - vgl. Fig. 2, 4 und 11 - Kontaktelemente 16 gehalten, die zur Kontaktierung der in der Karte 2 vorhandenen Kontakte dienen. In Längsrichtung am hinteren Ende des Kontaktträgers 11 wird jenseits - vgl. Fig. 2 und 3 - einer Anschlagfläche 171 für die eingesetzte Karte 2 eine Schalterkontaktkammer 17 gebildet. Die Schalterkontaktkammer 17 wird durch einen Teil der Bodenplatte 14 gebildet und ferner durch eine von der Bodenplatte 14 aus nach oben ragende hintere Querwand 18 sowie eine in Längsrichtung vor dieser mit Abstand zugeordnete vordere Querwand 19. Die vordere Querwand 19 bildet die Anschlagfläche 171.

### Kontaktträgerseitige Kontaktbefestigungsmittel 71

Zur Befestigung sowie zur ordnungsgemäßen Ausrichtung der Schaltkontakte des Kartenanwesenheitsschalters 12 sind Befestigungsmittel für die Schaltkontakte vorgesehen, die im Falle eines Smart Card Connectors 10 ,als kontaktträgerseitige Kontaktbefestigungsmittel 71 bezeichnet, am Kontaktträger 11 ausgebildet sind. Zusätzlich zu diesen kontaktträgerseitigen Kontaktbefestigungsmitteln 71 sind - vorzugsweise in Querrichtung von diesen beabstandet - am Kontaktträger 11 ferner noch für den Öffner 121 verwendete Anlagemittel 33 und für den Schließer 125 verwendete Anlagemittel 34 ausgebildet.

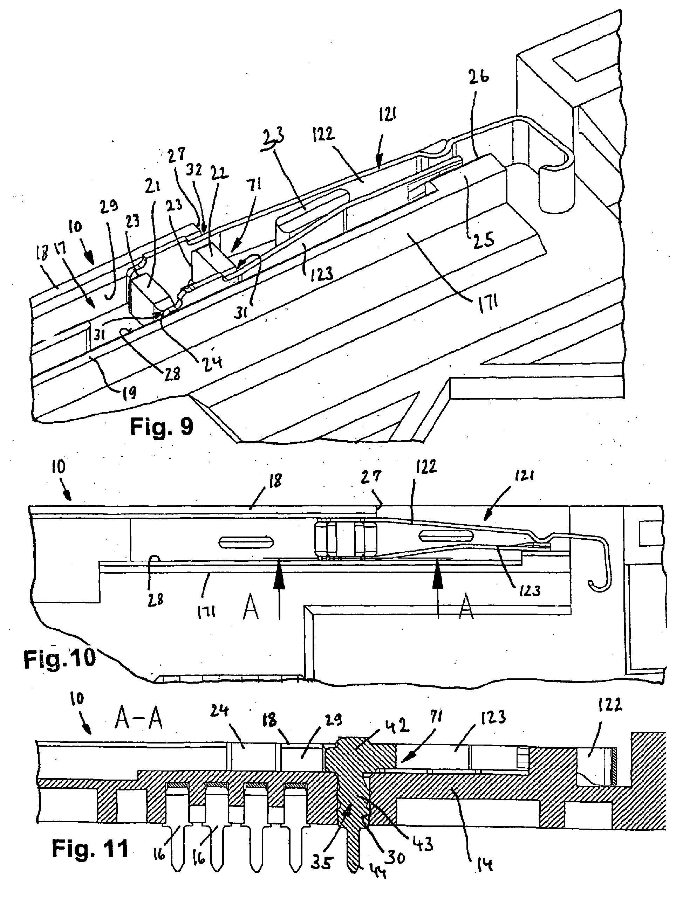

Vorzugsweise sind, wie gezeigt, die kontaktträgerseitigen Kontaktbefestigungsmittel 71 für den Öffner 121 und Schließer 125 identisch. Im Einzelnen umfassen die Kontaktbefestigungsmittel 71 zwei Befestigungsöffnungen, vorzugsweise Schlitze 30, von denen nur einer in Fig. 11 gezeigt ist. Der zweite Schlitz 30 verläuft parallel zum ersten gezeigten Schlitz 30 etwas in Längsrichtung nach hinten (vgl. Fig. 9) versetzt im hinteren Bereich des Kontaktträgers 11. Vorzugsweise weisen die Kontaktbefestigungsmittel 71 zusätzlich Halterungs- und Führungsmittel vorzugsweise in der Form von zwei in Längsrichtung verlaufenden und in Querrichtung beabstandeten Längsstegen 21, 22 auf. Die Stege 21, 22 sind vorzugsweise von identischer Gestalt. Jeder der Stege 21, 22 bildet - vgl. Fig. 9 - eine quer verlaufende Wand 23 und eine quer verlaufende Wand 24. Die Querwände 24 der Stege 21, 22 sind in Fig. 9 schlecht zu bezeichnen, sie sind aber ohne weiteres für den Fachmann als sich parallel zu den Querwänden 23 erstreckend vorzustellen. Die Querwände 23, 24 wirken mit der hinteren Querwand 18 bzw. der vorderen Querwand 19 zusammen, welche Anlageflächen 28 bzw. 29 bilden. Diese Anlageflächen 28, 29 definieren mit den Querwänden 24, 23 der Stege 21, 22 Spalte 31, 32, die zur Halterung bzw. Befestigung der Schaltkontakte des Kartenanwesenheitsschalters 12 beitragen.

Zusätzlich zu oben erwähnten Anlagemitteln 33 für die Schaltkontakte 122, 123 des Öffners 121 sieht man beispielsweise in Fix. 9 deutlich einen Vorsprung 25, der durch die vordere Querwand 19 gebildet wird, und der eine (ebenfalls allgemein als Anlagemittel zu bezeichnende) Anlagefläche 26 für den noch zu beschreibenden passiven Schaltkontakt 123 des Öffners 121 vorsieht. Ferner erkennt man in Fig. 9, dass die hintere Querwand 18 ein Wandende 27 besitzt, so dass in einem größeren Bereich des aktiven Schaltkontakts 122 des Öffners 121 keine hintere Querwand 18 vorhanden ist.

Die Anlagemittel 33, 34 werden durch in Querrichtung, jeweils gleich beabstandet von den Stegen 21, 22, von der Bodenwand der Kammer bzw. des Kontaktträgers 11 hochstehende Vorsprünge oder Führungstürme gebildet, die die Anlagemittel 33, 34 bilden. Der Führungsturm 33 (Fig. 5) besitzt Führungs- bzw. Anlageflächen 231, 232. Der Führungsturm 34 (Fig. 5) besitzt beidseitig in Querrichtung verlaufende Führungs- bzw. Anlageflächen 241, 242.

Es sei hier schon bemerkt, dass bei dem in den Figuren 2, 3 und 9 dargestellten Öffner 121 der passive Schaltkontakt 123 vorzugsweise derart ausgebildet ist, dass er mit Vorspannung, dann wenn der Öffner 121 offen ist, an der Anlagefläche 232 anliegt (Fig. 3):

### Die Schaltkontakte

Der erfindungsgemäße Kartenanwesenheitsschalter 12 kann wie erwähnt und wie in den Figuren. 2, 3, 9, 10 und 11 gezeigt als Öffner 121 mit einem aktiven Schaltkontakt 122 und einem passiven Schaltkontakt 123 realisiert werden. Der Kartenanwesenheitsschalter 12 kann aber auch, wie in den Figuren 4 und 5 gezeigt, als Schließer 125 mit einem passiven Schaltkontakt 127 und einem aktiven Schaltkontakt 126 realisiert sein.

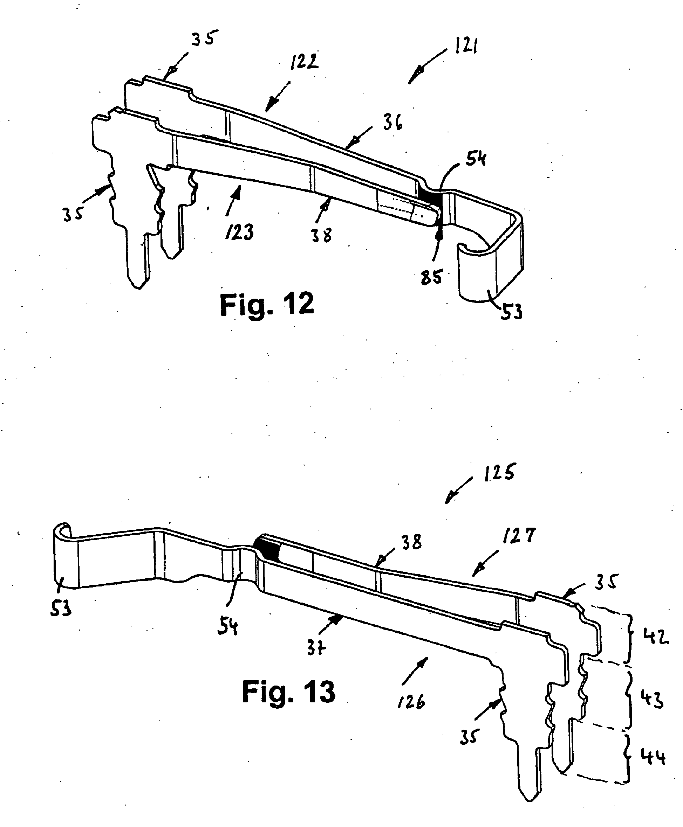

Wie sich aus der Darstellung der beiden Schaltkontakte des Öffners 121 in Fig. 12 und des Schließers 125 in Fig. 13 ergibt, sind der passive Schaltkontakt 123 des Öffners 121 und der passive Schaltkontakt 127 des Schließers 125 identisch. Ferner verwendet, wie in den Figuren 6 bis 8 veranschaulicht, der aktive Schaltkontakt 122 des Öffners 121 und der aktive Schaltkontakt 126 des Schließers 125 den gleichen in Fig. 6 gezeigten Rohling 50. In Fig. 7 ist dargestellt, wie man durch Biegen des Rohlings 50 um die Winkel α und β den aktiven Schaltkontakt 122 für den Öffner 121 erhält. In Fig. 8 ist dargestellt wie man durch Biegen des Rohlings 50 gemäß Fig. 6 um den Winkel α den aktiven Schaltkontakt 126 des Schließers 125 erhält.

Im Einzelnen sieht man in den Figuren 6 bis 8, dass der aus Blech herausgestanzte Rohling 50 einen Befestigungsabschnitt 51 aufweist, an den sich über eine Kontaktausbuchtung 54 ein Betätigungsabschnitt 52 anschließt, der in einer Betätigungsbiegung 53 endet.

In Fig. 12 ist der Öffner 121 in Schließstellung, in etwa in seiner Einbaulage in den Kontaktträger 11, schematisch dargestellt. Der aktive Schaltkontakt 122 des Öffners 121 weist Befestigungsmittel 35 im Folgenden kurz als ein Befestigungsteil 35 bezeichnet sowie einen sich vorzugsweise dazu senkrecht erstreckenden (aktiven) Kontaktarm 36 auf. Bevorzugter Weise ist der Befestigungsteil 35 auch zum elektrischen Anschluss durch einen noch zu beschreibenden Anschlussabschnitt 44 ausgebildet und könnte dann auch als Befestigungs-/Anschlussteil bezeichnet werden. An dem Wölbungsaußenteil der vorzugsweise quer zur Längsrichtung des aktiven Kontaktarms 36, 37 verlaufenden Kontaktausbuchtung 54 ist eine Kontaktstelle oder Kontaktschicht 85 aufgebracht. Zur Einsparung des die Kontaktschicht 85 bildenden Materials ist diese im Wesentlichen auf den Wölbungsbereich beschränkt.

Der passive Schaltkontakt 123 des Öffners 121 besitzt vorzugsweise einen Befestigungsteil 35, der identisch zu dem Befestigungsteil 35 des aktiven Schaltkontakts 122 ausgebildet ist. Ebenfalls senkrecht zu dem Befestigungsteil 35 erstreckt sich ein (passiver) Kontaktarm 38, der an seinem freien Ende mit einer Kontaktstelle oder Kontaktschicht 86 versehen ist, die mit der Kontaktstelle 85 des aktiven Kontaktarms 36 zusammenarbeiten kann. Vorzugsweise ist der passive Kontaktarm 38 an seinem die Kontaktstelle 86 tragenden Ende in Längsrichtung des Kontaktarms 38 gewölbt wie dies in Fig. 12 dargestellt ist.

Der in Fig. 13 gezeigte Schließer 125 weist einen passiven Schaltkontakt 127 auf, der in gleicher Weise wie der passive Schaltkontakt 123 des Öffners ausgebildet ist. Im Folgenden wird daher nur der eine oder andere passive Schaltkontakt 123, 127 weiter beschrieben.
Der aktive Schaltkontakt 126 des Schließers 125 weist einen Befestigungsteil 35 auf, der identisch zu den Befestigungsteilen 35 der Schaltkontakte 122, 123 und 127 ist. Senkrecht zum Befestigungsteil 35 des aktiven Schaltkontakts 126 verläuft ein (aktiver) Kontaktarm 37, der in der Betätigungsbiegung 53 endet. An der Außenseite der Kontaktausbuchtung 54 ist wiederum wie beim aktiven Schaltkontakt 122 eine Kontaktstelle oder Kontaktschicht 85 vorgesehen, die mit der entsprechenden Kontaktstelle bzw. Kontaktschicht am passiven Kontaktarm 38 zusammenarbeitet.

Der bei allen Schaltkontakten 122, 123, 126, 127 vorzugsweise in gleicher Weise ausgebildete Befestigungsteil 35 weist wie dies in Fig. 13 dargestellt ist, einen oberen Halteabschnitt 42, einen mittleren Befestigungsabschnitt 43 und vorzugsweise einen unteren Kontaktabschnitt 44 auf. Der Halteabschnitt 42 befindet sich bei eingesetztem Schaltkontakt in einem der Spalte 31, 32, während sich - vgl. Fig. 11 - der vorzugsweise Verzahnungen aufweisende Befestigungsabschnitt 43 eingepresst in einem der entsprechenden Schlitze 30 befindet. Der Kontaktabschnitt 44 steht wie in Fig. 11 gezeigt über die Unterseite des Kontaktträgers 11 vor, um beispielsweise in eine Leiterplatte eingesetzt zu werden.

Durch die im Ganzen symmetrische Ausbildung der Kontaktkammer 17 ist es möglich Smart Card Connectoren 10 je nach Kundenwunsch entweder mit einem Öffner 121 oder einem Schließer 125 als Kartenanwesenheitsschalter 12 auszugestalten.

### Die Arbeitsweise des Kartenanwesenheitsschalters 12

In den Figuren 2 und 4 ist der jeweilige Ausgangs- oder Normalzustand dargestellt, d.h. der offene Zustand des Öffners 121 (Fig. 2) und der geschlossene Zustand des Schließers 125 (Fig. 3). Gemäß Fig. 2 liegt im geschlossenem Zustand des Öffners 121 der passive Schaltkontakt 123 auf der Anlagefläche 26, mit einer gewissen, durch den aktiven Schaltkontakt 122 erzeugten Kraft, auf. Der aktive Schaltkontakt 122 liegt also im Schließzustand mit seiner Kontaktstelle 85 auf der Kontaktstele des passiven Kontakts 123 mit Vorspannung auf.

Wenn, wie in Fig. 3 gezeigt, die Karte 2 in den Kontaktträger 11 in ihre Lesestillung eingesetzt ist, und an der Anschlagfläche 171 anliegt, wurde der aktive Schaltkontakt 122 in die in Fig. 3 gezeigte Schwenkstellung verschwenkt, wobei die Kontaktstellen 85 außer Eingriff gebracht sind und der passive Schaltkontakt 123 mit seinem Kontaktarm 38 federnd an der Auflagefläche 232 des Vorsprungs 33 anliegt. Bei dem als Schließer 125 ausgebildeten Kartenanwesenheitsschalter 12 (Figuren 4 und 5), liegt der aktive Schaltkontakt 126 in seiner nicht betätigten Stellung an der Auflagefläche 28 federnd auf, während der passive Schaltkontakt 127 ebenfalls federnd mit seinem Kontaktarm 38 auf der Auflagefläche 241 des Vorsprungs 34 aufliegt.

Im betätigten Zustand des Schließers 125 hat, wie in Fig. 5 gezeigt, die Karte 2 an der Betätigungsbiegung 53 anliegend, die Kontaktstellen 85 der passiven und aktiven Schaltkontakte 127, 126 in Berührung gebracht, und dabei vorzugsweise den im nicht betätigten Zustand an der Kontaktfläche 241 anliegenden passiven Kontakt 127 leicht angehoben.

## Patentansprüche

1. Kontaktträger (11) für einen Smart Card Connector (10), welcher Connector Kontaktelemente (16) zur Kontaktierung der Smart Card (2) und einen Kartenanwesenheitsschalter (12) mit einem aktiven (122) und einen passiven (123) Schaltkontakt aufweist, **dadurch gekennzeichnet, dass**
der Kontaktträger (11) und die Schaltkontakte derart gestaltet sind, dass die zwei Schaltkontakte unter Beibehaltung des gleichen Anschlusslayouts - beispielsweise auf einer Leiterplatte - auch um 180° gedreht, montiert werden können, und sich **dadurch** eine Variante mit anfangs geschlossenem Schatten (Öffner) (121) und eine Variante mit anfangs geöffnetem Schalter (Schließer) (125) realisieren lässt.

2. Kontaktträger (11) nach Anspruch 1, **dadurch gekennzeichnet, dass** im Kontaktträger (11) eine Kontaktkammer (17) derart gestaltet ist, dass jeder Schaltkontakte in zwei Richtungen montierbar ist, wobei die Geometrie der Kontaktkammer (17) beidseitig so gestaltet ist, dass die zwei Schaltervarianten realisierbar sind.

3. Kontaktträger (11) nach Anspruch 1, wobei der Öffner (121) und der Schließer (125) jeweils einen passiven (123, 127) und einen aktiven (122, 126) Schaltkontakt aufweisen, wobei der passive Schaltkontakt (123, 127) für beide Schaltervarianten identisch ist.

4. Kontaktträger (11) nach Anspruch 3, wobei der aktive Schaltkontakt aus einem Schaltkontaktrohling (50) gefertigt wird, und wobei sich der aktive Schaltkontakt für den Öffner vom aktiven Schaltkontakt für den Schließer lediglich **dadurch** unterscheidet, dass beim Fertigbiegeprozess die Abwinkelung des aktiven Schaltkontakts an zwei Stellen anders erfolgt.

5. Kontaktträger (11) nach einem der vorhergehenden Ansprüche, mit einer Bodenplatte (14) die zur Aufnahme des Kartenanwesenheitsschalters (12) an ihrem in Längsrichtung hinten gelegenen Ende eine Schalterkontaktkammer (17) aufweist in der ein Öffner (123) bzw. ein Schließer (125) anordnungsfähig ist.

6. Kontaktträger (11) nach einem der vorhergehenden Ansprüche, wobei die Kontaktkammer durch zwei in Längsrichtung beabstandete Querwände (18, 19) definiert ist, zwischen denen an der Bodenplatte (14) kontaktträgerseitige Kontaktbefestigungsmittel (71) vorgesehen sind.

7. Kontaktträger (11) nach einem der vorhergehenden Ansprüche, wobei die kontaktträgerseitigen Kontaktbefestigungsmittel (71) Schlitze (30) aufweisen, die vorzugsweise in der Bodenplatte (14) ausgebildet sind.

8. Kontaktträger (11) nach einem der vorhergehenden Ansprüche, wobei die kontaktträgerseitigen Kontaktbefestigungsmittel (71) ferner in Querrichtung beabstandete Stege (21, 22) aufweisen, die zusammen mit den Kontaktkammerwänden (18, 19) Spalte (31, 32) bilden, zur Halterung eines aktiven und eines passiven Schaltkontakts.

9. Kontaktträger (11) nach einem der vorhergehenden Ansprüche, wobei in der Kontaktkammer Vorsprünge (33, 34) in Querrichtung beabstandet gegenüber den Kontaktbefestigungsmitteln (71) angeordnet sind, die Anlageflächen für die Schaltkontakte bilden.

10. Kontaktträger (11) nach einem der vorhergehenden Ansprüche, wobei der aktive Schaltkontakt (36, 37) und der passive Schaltkontakt sowohl des Öffners (121) als auch des Schließers (125) kontaktseitige Befestigungsmittel (35) aufweist, die vorzugsweise durch einen Halteabschnitt (42), einen Befestigungsabschnitt (43) und einen Kontaktabschnitt (44) gebildet sind.

11. Kontaktträger (11) nach einem der vorhergehenden Ansprüche, wobei die kontaktseitigen Befestigungsmittel (35) der passiven und aktiven Schaltkontakte des Öffners (121) und des Schließers (125) identisch sind

12. Kontaktträger (11) nach einem der vorhergehenden Ansprüche, wobei die Befestigungsabschnitte (43) der aktiven und passiven Schaltkontakte Verzahnungen aufweisen, die in im Kontaktträger (11) ausgebildeten Befestigungsöffnungen, vorzugsweise in der Form von Schlitzen (30), sich einschneidend befestigt sind.

13. Kontaktträger (11) nach einem der vorhergehenden Ansprüche, wobei die vorzugsweise als Anschtusszungen ausgebildete Kontaktabschnitte (44) über die Unterseite der Bodenplatte des Kontaktträgers (11) hinausragen, während die Halteabschnitte (42) in den Spalten (31, 32) geführt und vorzugsweise festgeklemmt sind.

14. Kontaktträger (11) nach einem der vorhergehenden Ansprüche, wobei die aktiven Schaltkontakte (122, 126) eine Kontaktausbuchtung (54) aufweisen an deren Wölbungsaußenteil und zwar vorzugsweise im Wesentlichen auf den Wölbungsbereich beschränkt eine Kontaktstelle bzw. Kontaktschicht (85) ausgebildet ist, wobei die Kontaktausbuchtung (54) vorzugsweise quer zur Längsstreckung des Kontaktarms (36, 37) verläuft.

15. Kontaktträger nach Anspruch 1, wobei vorzugsweise am Ende des passiven Kontaktarms (38) und des passiven Schaltkontakts (123) eine sich in Längsrichtung des Kontaktarm (38) erstreckende Wölbung ausgebildet ist, die vorzugsweise auf den Wölbungsbereich beschränkt eine Kontaktschicht bzw. Kontaktstelle (85) besitzt.

## Claims

1. A contact support (11) for a Smart Card (10), said contact support (11) comprising contact elements (16) for contacting said smart card (2) and further comprising a card presence switch (12) having an active (122) and a passive (123) switching contact, **characterized in that**
the contact support (11) and the switching contacts are designed such that the two switching contacts can also be mounted - for instance on a circuit board - in a position rotated by 180° maintaining the same termination layout, such that one embodiment provides an initially closed switch (opener, i.e. closed prior to actuation) (121) and another embodiment provides an initially open switch (closer, i.e. open prior to actuation) (125).

2. Contact support (11) as set forth in claim 1 **characterized in that** the contact support (11) comprises a contact chamber (17) which is designed such that each of the switching contacts can be mounted in two directions, wherein the geometry of the contact chamber (17) is designed on both sides such that the two embodiments of the switch can be realized.

3. Contact support (11) in claim 1, wherein the opener (121) and the closer (125) each comprise a passive (123, 127) and an active (122, 126) switching contact, wherein the passive switching contact (123, 127) is identical for both embodiments of the switch.

4. Contact support (11) in claim 3, wherein the active switching contact is made of raw switching contact (50) and wherein the active switching contact for the opener is different from the active switching contact for the closer only in so far as during the final bending process the angular part of the active switching contact is provided differently at two locations.

5. Contact support (11) of one of the preceding claims having a bottom plate (14), which is adapted to receive the card presence switch (12) by means of a switch contact chamber, which is positioned in longitudinal direction at the rear end of the bottom plate, wherein said opener (123) and a closer (125), respectively, is adapted to be located.

6. Contact support (11) as set forth in one of the preceding claims, wherein the contact chamber is defined by two transverse walls (18, 19) spaced in longitudinal direction, between which contact mounting means (71) of the contacts are provided at the bottom plate (14).

7. Contact support (11) as set forth in of one or more of the preceding claims, wherein said contact mounting means (71) at the contact support side comprise slots (30), which are preferably formed in the bottom plate (14).

8. Contact support (11) as set forth in one of the preceding claims, wherein the contact mounting means (71) provided on the contact support further comprise ribs (21, 22) spaced in transversal direction, said ribs forming together with the contact chamber walls (18, 19) gaps for supporting an active and a passive switching contact.

9. Contact support (11) as set forth in one or more of the preceding claims, wherein projections (33, 34) are provided in the contact chamber, said projections being transversely spaced from said contact mounting means (71) and form abutment surfaces for the switching contacts (10).

10. Contact support (11) as set forth in one or more of the preceding claims, wherein the active switching contact (36, 37) and the passive switching contact of the opener (12) as well as of the closer (125) comprise mounting means (35) on the contact support side, said mounting means being preferably formed by a holding section (42), a mounting section (43) and a contact section (44).

11. Contact support (11) as set forth in one of the preceding claims, wherein the mounting means (35) on the contact support side of the passive and active switching contacts of the opener (121) and the closer (125) are identical.

12. Contact support (11) as set forth in one of the preceding claims, wherein the mounting sections (43) of the active and passive switching contacts comprise teeth means, said teeth means provide for the mounting of said switching contacts by cutting into mounting openings provided in the contact support (11), said mounting openings are preferably in the form of slots (30).

13. Contact support (11) as set forth in one or more of the preceding claims wherein the contact sections (44) are preferably designed as termination tongues and project beyond the bottom side of the bottom plate of the contact support (11), while the holding sections (42) are guided in the gaps (31, 32) and preferably fixedly clamped, therein.

14. Contact support (11) as set forth in one or more of the preceding claims, wherein the active switching contact (122, 126) comprise a contact bulge (54), said contact bulge (54) having a bulge outer portion, wherein, preferably in substance in the area of the bulge a contact location or a contact layer (85) is provided, wherein said contact bulge (54) extends preferably transverse with respect to the longitudinal extension of the contact arm (36, 37).

15. Contact support (11) as forth in claim 1, wherein, preferably, at the end of the passive contact arm (38) and the passive switching contact (123) a bulge is provided, extending in longitudinal direction of the contact arm (38) is provided, said bulge comprising, preferably limited to the bulge area, a contact layer or a contact location (85).

## Revendications

1. Support de contacts (11) pour une carte à puce (10), ledit support de contacts (11) comprenant des éléments de contact (16) pour contacter la carte à puce (2) et comprenant en outre un commutateur de présence de carte (12) comprenant un contact de commutation actif (122) et un contact de commutation passif (123), **caractérisé en ce que**
le support de contacts (11) et les contacts de commutation sont conçus de telle sorte que les deux contacts de commutation peuvent aussi être montés - par exemple sur une carte de circuit - dans une position tournée de 180° en conservan le même tracé de terminaisons, de sorte qu'un mode de réalisation assure un commutateur normalement fermé (à ouverture, c'est-à-dire fermé avant une activation) (121) et un autre mode de réalisation assure un commutateur normalement ouvert (à fermeture, c'est-à-dire ouvert avant une activation) (125).

2. Support de contacts (11) selon la revendication 1, **caractérisé en ce que** le support de contacts (11) comprend une chambre de contacts (17) qui est conçue de telle sorte que les contacts de commutation peuvent être montés dans deux directions, la géométrie de la chambre de contacts (17) étant conçue sur les deux côtés de telle sorte que les deux modes de réalisation du commutateur peuvent être réalisés.

3. Support de contacts (11) selon la revendication 1, dans lequel le contact à ouverture (121) et le contact à fermeture (125) comprennent chacun un contact de commutation passif (123, 127) et un contact de commutation actif (122, 126), le contact de commutation passif (123, 127) étant identique dans les deux modes de réalisation du commutateur.

4. Support de contacts (11) selon la revendication 3, dans lequel le contact de commutation actif est fabriqué avec un contact de commutation brut (50) et dans lequel le contact de commutation actif pour le contact à ouverture diffère du contact de commutation actif pour le contact à fermeture seulement en ce que pendant le processus de courbure final la partie angulaire du contact de commutation actif est prévue de façon différente en deux emplacements.

5. Support de contacts (11) selon l'une quelconque des revendications précédentes, comportant une plaque de fond (14), qui est apte à recevoir le commutateur de présence de carte (12) au moyen d'une chambre de contacts de commutation, qui est positionnée dans une direction longitudinale au niveau de l'extrémité arrière de la plaque de fond, dans laquelle le contact à ouverture (123) et un contact à fermeture (125), respectivement, sont aptes à être placés.

6. Support de contacts (11) selon l'une quelconque des revendications précédentes, dans lequel la chambre de contacts est définie par deux parois transversales (18, 19) espacées dans une direction longitudinale, entre lesquelles des moyens de montage de contacts (71) pour les contacts sont prévus au niveau de la plaque de fond (14).

7. Support de contacts (11) selon une ou plusieurs des revendications précédentes, dans lequel les moyens de montage de contacts (71) du côté du support de contacts comprennent des fentes (30), qui sont de préférences formées dans la plaque de fond (14).

8. Support de contacts (11) selon l'une quelconque- des revendications précédentes, dans lequel les moyens de montage de contacts (71) prévus sur le support de contacts comprennent en outre des nervures (21, 22) espacées dans la direction transversale, lesdites nervures formant conjointement avec les parois de la chambre de contacts (18, 19) des espaces permettant d'accepter un contact de commutation actif et un contact de commutation passif.

9. Support de contacts (11) selon une ou plusieurs des revendications précédentes, dans lequel des saillies (33, 34) sont prévues dans la chambre de contacts, les saillies étant espacées transversalement par rapport auxdits moyens de montage de contacts (71) et formant des surfaces de butée pour les contacts de commutation (10).

10. Support de contacts (11) selon une ou plusieurs des revendications précédentes, dans lequel le contact de commutation actif (36, 37) et le contact de commutation passif du contact à ouverture (12) aussi bien que du contact à fermeture (125) comprennent des moyens de montage (35) sur le côté du support de contacts, les moyens de montage étant de préférence formés par une section de maintien (42), une section de montage (43) et une section de contact (44).

11. Support de contacts (11) selon l'une quelconque des revendications précédentes, dans lequel les moyens de montage (35) sur le côté du support de contacts des contacts de commutation actif et passif du contact à ouverture (121) et du contact à fermeture (125) sont identiques.

12. Support de contacts- (11) selon l'une quelconque des revendications précédentes, dans lequel les sections de montage (43) des contacts de commutation actif et passif comprennent des moyens de denture, les moyens de denture assurant le montage des contacts de commutation par une découpe dans des ouvertures de montage prévues dans le support de contacts (11), les ouvertures de montage ayant de préférence la forme de fentes (30).

13. Support de contacts (11) selon une ou plusieurs des revendications précédentes, dans lequel les sections de contact (44) sont de préférence conçues sous forme de languettes de terminaison et font saillie au delà du côté de fond de la plaque de fond du support de contacts (11), tandis que les sections de maintien (42) sont guidées dans les espaces (31, 32) et sont de préférence bridées dedans de façon fixe.

14. Support de contacts (11) selon une ou plusieurs des revendications précédentes, dans lequel le contact de commutation actif (122, 126) comprend un renflement de contact (54), le renflement de contact (54) ayant une partie de renflement extérieure, dans lequel de préférence en substance dans la zone du renflement est prévu un emplacement de contact ou une couche de contact (85), le renflement de contact (54) s'étendant de préférence de façon transversale par rapport à l'extension longitudinale du bras de contact (36, 37).

15. Support de contacts (11) selon la revendication 1, dans lequel, de préférence, au niveau de l'extrémité du bras de contact passif (38) et du contact de commutation passif (123), est prévu un renflement, s'étendant dans une direction longitudinale du bras de contact (38), le renflement comprenant, de préférence limité à la zone du renflement, une couche de contact ou un emplacement de contact (85).
